# EUROPÄISCHE PATENTSCHRIFT

(11) **EP 1 991 101 B1**
(45) Veröffentlichungstag und Bekanntmachung des Hinweises auf die Patenterteilung: **05.05.2010**
(21) Anmeldenummer: 07712310.7
(22) Anmeldetag: 23.02.2007
(51) Int. Cl.: A47L 9/26, F16L 57/02

(54) **BIEGESCHUTZ FÜR DEN KÜHLSCHLAUCH EINER KABELAUFROLLVORRICHTUNG EINES STAUBSAUGERS**
BENDING GUARD FOR THE COOLING TUBE OF A CABLE WINDER OF A VACUUM CLEANER
PROTECTION ANTIFLEXION POUR LE MANCHON DE REFROIDISSEMENT D'UN DISPOSITIF D'ENROULEMENT DE CABLE POUR ASPIRATEUR

(30) Priorität: 28.02.2006 DE 102006009269
(43) Veröffentlichungstag der Anmeldung: 19.11.2008
(73) Patentinhaber: BSH Bosch und Siemens Hausgeräte GmbH, 81739 München (DE)
(72) Erfinder: WEIGAND, Artur, 97618 Niederlauer (DE)
(86) Internationale Anmeldenummer: PCT/EP2007/051763
(87) Internationale Veröffentlichungsnummer: WO 2007/099065

(56) Entgegenhaltungen:
- WO-A-01/55024
- DE-A1- 2 724 249
- DE-U1- 8 532 395
- US-A1- 2005 184 509
- US-A1- 2006 021 184
- US-A1- 2006 213 570

## Beschreibung

Die vorliegende Erfindung betrifft eine Kabelaufrollvorrichtung, die in einem entsprechenden Aufnahmeraum eines Staubsaugers einbaubar ist, wobei an der Kabelaufrollvorrichtung eine Hohlleitung mit ihrem einen Ende angeschlossen ist, deren anderes Ende im Ansaugbereich des Staubsaugergebläses endet.

Typische Kalberaufrollvorrichtungen, welche in einen entsprechenden Aufnahmeraum eines Staubsaugers einbaubar sind, sind vielfältig bekannt. Sie umfassen eine Kabeltrommel, welche z.B. mit ihrer hohl ausgebildeten Nabe auf einen an einer feststehenden Tragwand der Vorrichtung axial vorstehenden Lagerzapfen aufgesteckt ist.

Während des Betriebs eines Staubsaugers verbleibt jedoch in der Regel noch ein Teil des Anschlusskabels auf der Kabeltrommel aufgerollt. Da die einzelnen Kabelwindungen auf der Kabeltrommel sehr dicht aneinander liegen, wird gerade der noch aufgewickelte Teil des Anschlusskabels durch den Betriebsstrom des Staubsaugers besonderes stark erwärmt.

Beispielsweise aus der DE 27 24 249 A1 war bereits bekannt, mittels des Staubsaugergebläseaggregates einen Kühlluftstrom durch den Aufnahmeraum der Aufwickelvorrichtung hindurch zu saugen, der eine Begrenzung der Erwärmung des Kabels auf zulässige Temperaturwerte bewirken sollte.

Es hatte sich aber gezeigt, dass eine solche Kühlung des Aufnahmeraumes nicht immer ausreichend war, um die notwendige Temperaturbegrenzung zu erreichen. Dies war insbesondere dann der Fall, wenn der Betriebsstrom des Staubsaugers entweder infolge eines sehr leistungsstarken Gebläses oder infolge einer niedrigeren Betriebsspannung als z.B. 220 bzw. 230 V, zum, Beispiel 110 V, höher als allgemein üblich war.

Zur Vermeidung dieser Problematik wird bereits in der DE 85 32 395 U1 eine intensive Kühlung des auf der Kabeltrommel aufgewickelten Kabels vorgeschlagen, ohne dass hiezu eine große Kühlluftmenge erforderlich ist. Vielmehr sind beispielsweise in der Wand der Nabe radial gerichtete Durchbrechungen vorgesehen, wobei an der Tragwand mindestens eine mit dem Hohlraum der Nabe in Saugverbindung stehende Öffnung vorhanden ist, an die ein Hohlleitung mit ihrem einen Ende angeschlossen ist, deren anderes Ende im Ansaugbereich des Staubsaugergebläses mündet. Der Kühlluftstrom wird auf diese Weise unmittelbar an den auf der Kabeltrommel aufgewickelten Kabelwindungen vorbeigeführt, so dass auch mit einer relativ kleinen Kühlluftmenge eine ausreichende Kühlung der Kabelwindungen erreicht und eine unzulässige Erwärmung derselben vorteilhaft vermieden wird.

Der Einsatz derartiger Hohlleitungen zwecks Realisierung einer sog. Bypasskühlung ist bis heute weit verbreitet. Insbesondere aufgrund immer enger werdender Bauräume muss die Hohlleitung auf dem Weg von der Kabeltrommel zum Saugluftstrom des Staubsaugers (Staubraum) jedoch regelmäßig um wenigstens eine Ecke von etwa 90° verlegt werden. Bedingt durch das bestehende Vakuum in der Hohlleitung und die Wärmebelastung durch die abgesaugte warme Luft knickt die Hohlleitung an der Biegestelle regelmäßig ein. Bedingt durch die Verengung an der Knickstelle kann dann nicht mehr genügend Kühlluft durch den Kühlschlauch strömen, da der Luftfreiraum zu klein ist. Dies hat eine Erwärmung der Kabeltrommel nicht nur bei langer Leitungslänge über den zulässigen Grenzwerten zur Folge.

Dies sucht die vorliegende Erfindung zu vermeiden. Ihr liegt die Aufgabe zugrunde, eine flexibel verlegbare und dennoch formstabile Hohlleitung für die Kabelaufrollvorrichtung eines Staubsaugers bereitzustellen, bei welcher auch weiterhin eine intensive Kühlung des auf der Kabeltrommel aufgewickelten Kabels erreicht wird, ohne dass hierzu eine große Kühlluftmenge erforderlich ist.

Diese Aufgabe wird durch eine Kabelaufrollvorrichtung mit den Merkmalen gemäß Anspruch 1 gelöst. Vorteilhafte Aus- und Weiterbildungen, welche einzeln oder in Kombination miteinander eingesetzt werden können, sind Gegenstand der abhängigen Ansprüche.

Die erfindungsgemäße Kabelaufrollvorrichtung baut auf gattungsgemäßen Kabelaufrollvorrichtungen dadurch auf, dass in der Hohlleitung, insbesondere im Bereich der Biegestelle/n, wenigstens abschnittsweise ein Federelement angeordnet ist.

Der Kühlluftstrom kann auf diese Weise in einer einen stets konstanten Querschnitt aufweisenden Hohlleitung rückgeführt werden, so dass auch mit einer relativ kleinen Kühlmenge eine ausreichende Kühlung der Kabelwindungen erreicht und eine unzulässige Erwärmung derselben vorteilhaft vermieden wird.

Zusätzliche Einzelheiten und weitere Vorteile der Erfindung werden nachfolgend beispielhaft an Hand einer Kabelaufrollvorrichtung für einen Staubsauger und in Verbindung mit der beigefügten Zeichnung beschrieben.

Darin zeigen schematisch:
- Fig. 1: in einer Schnittansicht eine Kabelaufrollvorrichtung;
- Fig. 2a und 2b: den Kühlschlauch der Kabelaufrollvorrichtung nach Fig. 1 in Alleinstellung; und
- Fig. 3a und 3b: einen erfindungsgemäßen Kühlschlauch einer Kabelaufrollvorrichtung in Alleinstellung.

Bei der nachfolgenden Beschreibung der bevorzugten Ausführungsformen der vorliegenden Erfindung bezeichnen gleiche Bezugszeichen gleiche oder vergleichbare Komponenten.

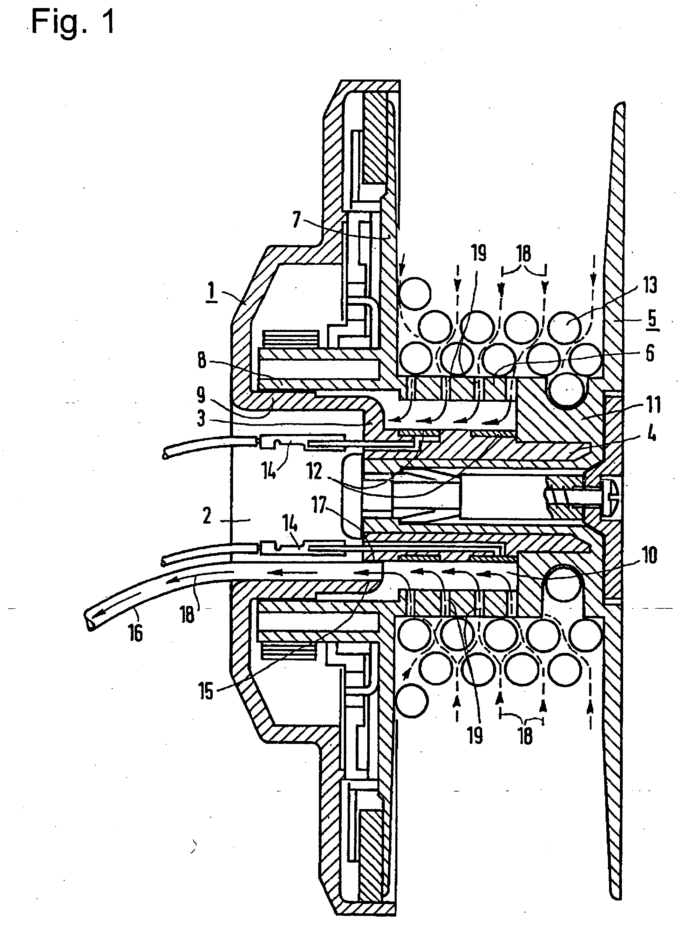

Fig. 1 zeigt in einer Schnittansicht beispielhaft eine bekannte Kabelaufrollvorrichtung. Mit 1 ist eine feststehende Tragwand bezeichnet, an der ein topfförmiger Einzug 2 vorgesehen ist, an dessen Boden 3 ein Lagerzapfen 4 angeformt ist. Eine Kabeltrommel 5 weist eine hohle Nabe 6 auf, die über die eine Seitenwand 7 der Kabeltrommel 5 hinaus zu einem axial vorstehenden Lageransatz 8 verlängert ist. Dieser Lageransatz 8 bildet zusammen mit dem Außenmantel 9 des topfförmigen Einzuges 2 eine erste Lagerstelle für die Kabeltrommel 5. Eine zweite Lagerstelle wird von einem in den Hohlraum 10 der Nabe 6 vorspringenden und auf dem Lagerzapfen 4 aufruhenden Lagerbund 11 gebildet. Im Bereich des Hohlraums 10 sind auf dem Lagerzapfen 4 Schleifringe 12 angeordnet, an denen in Fig. 1 nicht dargestellte Schleifkontakte anliegen, die mit dem auf der Kabeltrommel aufgewickelten Kabel 13 verbunden sind. Mit 14 sind die mit den Schleifringen 12 verbundenen Zuführungsleitungen bezeichnet.

Im Boden 3 des topfförmigen Einzuges 2 ist eine Öffnung 15 angeordnet, an die als Hohlleitung ein Schlauch 16 mit seinem einen Ende 17 angeschlossen ist. Die gezeigte Anbindung ist lediglich beispielhaft und unerheblich für die vorliegende Erfindung. Vielmehr kann die Hohlleitung 16 in beliebig anders bekannter Weise an der Kabelaufrollvorrichtung angebunden sein.

Das andere, in der Zeichnung nicht dargestellt Ende des Schlauches 16 mündet entweder im Ansaugbereich des Staubsaugergebläses zum Beispiel im Staubraum oder wird direkt mit einem am Gehäuse des Staubsaugergebläses vorgesehenen Ansaugstutzen verbunden. Wie durch Pfeile 18 angedeutet, wird von dem Staubsaugergebläse über den Schlauch 16 ein Kühlluftstrom angesaugt. Über in der Wand der Nabe 6 ausgebildete, radial gerichtete Durchbrechungen 19 wird die Kühlluft in den Hohlraum 10 der Kabeltrommel 5 eingesaugt. Die Kühlluft muss hierbei an den einzelnen Windungen des auf der Kabeltrommel 5 aufgewickelten Kabels 13 vorbeistreichen, so dass eine intensive Kühlung der aufgewickelten Kabelwindungen erreicht wird. Durch die beiden Lagerstellen wird der Hohlraum 10 in der Nabe 6 hinreichend abgedichtet, so dass die über den Schlauch 16 angesaugte Luft nahezu vollständig über die Durchbrechungen 19 in den Hohlraum 10 eingesaugt wird.

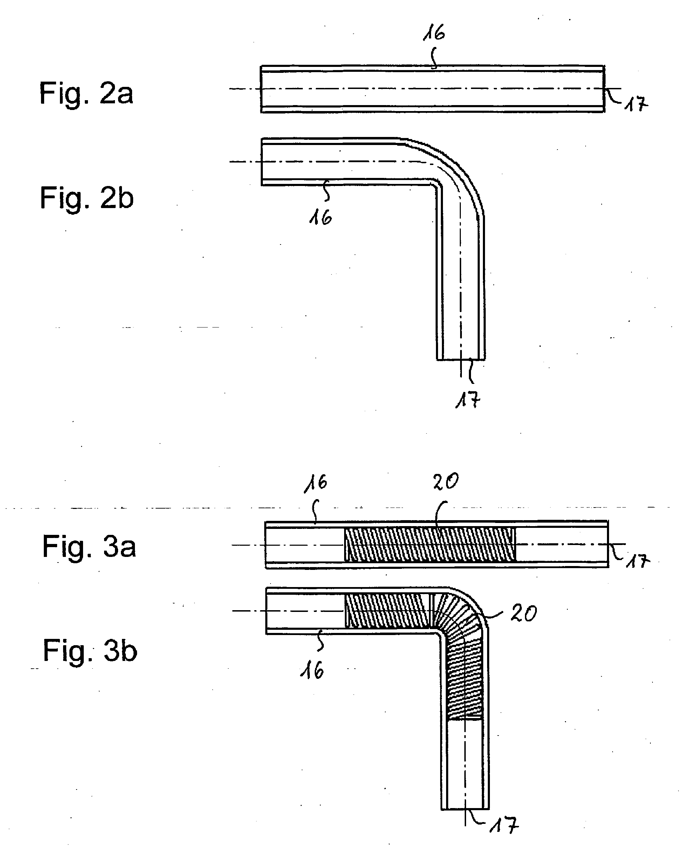

Fig. 2 zeigt den Kühlschlauch 16 der Kabelaufrollvorrichtung nach Fig. 1 in Alleinstellung; Fig. 2a im ungeknickten und Fig. 2b im geknickten Zustand. Insbesondere aufgrund immer enger werdender Bauräume muss die Hohlleitung 16 auf dem Weg von der Kabeltrommel 5 zum Saugluftstrom des Staubsaugers (Staubraum) jedoch regelmäßig um wenigstens eine Ecke von etwa 90° verlegt werden. Bedingt durch das bestehende Vakuum in der Hohlleitung 16 und die Wärmebelastung durch die abgesaugte warme Luft knickt die Hohlleitung 16 an der Biegestelle regelmäßig ein. Bedingt durch die Verengung an der Knickstelle kann dann nicht mehr genügend Kühlluft durch den Kühlschlauch 16 strömen, da der Luftfreiraum zu klein ist. Dies hat eine Erwärmung der Kabeltrommel 5 nicht nur bei langer Leitungslänge über den zulässigen Grenzwerten zur Folge.

Dies wird durch den in Fig. 3a und 3b in Alleinstellung gezeigten erfindungsgemäßen Kühlschlauch 16 einer Kabelaufrollvorrichtung vorteilhaft vermieden. In den Kühlschlauch 16 ist ein Federelement 20, vorzugsweise eine Spiralfeder, eingesteckt, welches an der Stelle der starken Biegung positioniert wird. Der Außendurchmesser der Feder 20 ist erfindungsgemäß bevorzugt geringfügig größer als der Innendurchmesser des Kühlschlauches 16. Der elastische Kühlschlauch hält so vorteilhaft die Feder 20 an der vorgegebenen Position (Biegestelle). Der Schlauch 16 selbst wird durch das Federelement 20 stabilisiert. Der so gebildete freie Luftweg bleibt auch bei starker Biegung der Hohlleitung 16 hinreichend konstant, womit die Kühlung der Kabeltrommel 5 gewährleistet und eine unzulässige Erwärmung derselben 5 vorteilhaft vermieden ist.

Die vorliegende Erfindung sichert vorteilhaft einen freien Luftweg für die Kühlluft bei gleichzeitiger Einhaltung von Temperaturgrenzwerten. Sie erlaubt zudem den Einsatz längerer Zu- bzw. Ableitungen als wie sie bisher verwendbar waren. Darüber hinaus vermeidet sie vorteilhaft den Einsatz hochwärmebeständiger Materialien. Ebenso vermeidet sie den Einsatz starrer Winkelstücke zwischen den Schläuchen, was den Montageaufwand erhöhen würde. Die erfindungsgemäße Ausgestaltung ist somit kostengünstiger als alternative Lösungsansätze.

### Bezugszeichenliste

- 1: Tragwand
- 2: topfförmiger Einzug
- 3: Boden
- 4: Lagerzapfen
- 5: Kabeltrommel
- 6: Nabe
- 7: Seitenwand
- 8: Lageransatz
- 9: Außenmantel
- 10: Hohlraum
- 11: Lagerbund
- 12: Schleifringe
- 13: Kabel
- 14: Zuführungsleitungen
- 15: Öffnung
- 16: Hohlleitung, Schlauch
- 17: Schlauchende
- 18: durch Pfeile gekennzeichnete Strömungsrichtung
- 19: Durchbrechungen
- 20: Federelement, Spiralfeder

## Patentansprüche

1. Kabelaufrollvorrichtung, die in einem entsprechenden Aufnahmeraum eines Staubsaugers einbaubar ist, wobei an der Kabelaufrollvorrichtung eine Hohlleitung (16) mit ihrem einen Ende (17) angeschlossen ist, deren anderes Ende im Ansaugbereich des Staubsaugergebläses endet, **dadurch gekennzeichnet, dass** in der Hohlleitung (16) wenigstens abschnittsweise ein Federelement (20) angeordnet ist.

2. Kabelaufrollvorrichtung nach Anspruch 1, wobei auf dem Weg von der Kabelaufrollvorrichtung in den Ansaugbereich die Hohlleitung (16) um wenigstens eine Ecke von z.B. etwa 90° geführt ist wodurch sich in der Hohlleitung (16) eine Biegestelle ausbildet, **dadurch gekennzeichnet, dass** das Federelement (20) auf Höhe der Biegestelle in der Hohlleitung (16) angeordnet ist.

3. Kabelaufrollvorrichtung nach Anspruch 1 oder 2, **dadurch gekennzeichnet, dass** das Federelement (20) eine Spiralfeder ist.

4. Kabelaufrollvorrichtung nach einem der Ansprüche 1 bis 3, **dadurch gekennzeichnet, dass** die Hohlleitung (16) ein aus Kunststoff gefertigter Schlauch ist.

5. Kabelaufrollvorrichtung nach einem der Ansprüche 1 bis 4, **dadurch gekennzeichnet, dass** die Hohlleitung (16) mit ihrem anderen Ende an einen auf der Außenseite des Staubsaugergebläsegehäuses vorgesehenen Anschlussstutzen angeschlossen ist.

6. Kabelaufrollvorrichtung nach einem der Ansprüche 1 bis 4, **dadurch gekennzeichnet, dass** die Hohlleitung (16) mit ihrem anderen Ende im Staubraum des Staubsaugers mündet.

7. Kabelaufrollvorrichtung nach einem der vorherigen Ansprüche, **dadurch gekennzeichnet, dass** der Außendurchmesser des Federelements (20) geringfügig größer als der Innendurchmesser der Hohlleitung (16) ist.

## Claims

1. Cable winding device which can be installed in a corresponding mounting space of a vacuum cleaner, wherein a hollow duct (16) is connected by one end (17) thereof with the cable winding device and the other end of the duct ends in the suction region of the vacuum cleaner fan, **characterised in that** a spring element (20) is arranged at least in sections in the hollow duct (16).

2. Cable winding device according to claim 1, wherein on the way from the cable winding device to the suction region the hollow duct (16) is led over at least one corner of, for example, approximately between 90°, whereby a bending point forms in the hollow duct (16), **characterised in that** the spring element (20) is arranged at the level of the bending point in the hollow duct (16).

3. Cable winding device according to claim 1 or 2, **characterised in that** the spring element (20) is a helical spring.

4. Cable windier according to any one of claims 1 to 3, **characterised in that** the hollow duct (16) is a hose made of plastics material.

5. Cable winding device according to any one of claims 1 to 4, **characterised in that** the hollow duct (16) is connected by the other end thereof with a connecting stub point provided on the outer side of the vacuum cleaner fan housing.

6. Cable winding device according to any one of claims 1 to 4, **characterised in that** the hollow duct (16) opens by the other end thereof into the dust chamber of the vacuum cleaner.

7. Cable winding device according to any one of the preceding claims, **characterised in that** outer diameter of the spring element (20) is slightly larger than the inner diameter of the hollow duct (16).

## Revendications

1. Dispositif d'enroulement de câble apte à être monté dans un logement correspondant d'un aspirateur, audit dispositif d'enroulement de câble étant raccordée une conduite creuse (16) par une (17) de ses extrémités, dont l'autre extrémité se termine dans la zone d'aspiration du ventilateur d'aspirateur, **caractérisé en ce qu'**un élément ressort (20) est agencé au moins dans un segment de la conduite creuse (16).

2. Dispositif d'enroulement de câble selon la revendication 1, la conduite creuse (16), sur le chemin menant du dispositif d'enroulement de câble à la zone d'aspiration, passant par au moins un angle, par exemple d'environ 90°, formant ainsi un point de flexion dans la conduite creuse (16), **caractérisé en ce que** l'élément ressort (20) est agencé au niveau dudit point de flexion dans la conduite creuse (16).

3. Dispositif d'enroulement de câble selon la revendication 1 ou 2, **caractérisé en ce que** l'élément ressort (20) est un ressort hélicoïdal.

4. Dispositif d'enroulement de câble selon une des revendications 1 à 3, **caractérisé en ce que** la conduite creuse (16) est un tuyau flexible réalisé en matière plastique.

5. Dispositif d'enroulement de câble selon l'une des revendications 1 à 4, **caractérisé en ce que** la conduite creuse (16) est raccordée par son autre extrémité à un raccord prévu sur l'extérieur du carter de ventilateur de l'aspirateur.

6. Dispositif d'enroulement de câble selon l'une des revendications 1 à 4, **caractérisé en ce que** la conduite creuse (16) débouche par l'autre extrémité dans le compartiment poussière de l'aspirateur.

7. Dispositif d'enroulement de câble selon l'une des revendications précédentes, **caractérisé en ce que** le diamètre extérieur de l'élément ressort (20) est légèrement supérieur au diamètre intérieur de la conduite creuse (16).
